Europäisches Patentamt

European Patent Office

Office européen des brevets

(11) Publication number: 0 336 550 A1

## (12) EUROPEAN PATENT APPLICATION

(21) Application number: 89301841.6

(22) Date of filing: 24.02.89

(51) Int. Cl.⁴: B60R 25/00 , F16B 41/00 , //F16B23/00

The title of the invention has been amended (Guidelines for Examination in the EPO, A-III, 7.3).

(30) Priority: 26.02.88 GB 8804596

(43) Date of publication of application:
11.10.89 Bulletin 89/41

(84) Designated Contracting States:
DE GB IT

(71) Applicant: Gardiner, Alan Robert
39, Cleeview Road
Wombourne South Staffordshire WV5 0BD(GB)

Applicant: Nicklin, Harry Alec Alfred
24, Whitegates Road
Coseley Bilston West Midlands WV14 8UY(GB)

(72) Inventor: Gardiner, Alan Robert
39, Cleeview Road
Wombourne South Staffordshire WV5 0BD(GB)
Inventor: Nicklin, Harry Alec Alfred
24, Whitegates Road
Coseley Bilston West Midlands WV14 8UY(GB)

(74) Representative: Makovski, Priscilla Mary
BARKER, BRETTELL & DUNCAN 138 Hagley Road
Edgbaston Birmingham B16 9PW(GB)

(54) An assembly for locking a vehicle wheel to a hub and/or a trim to a vehicle wheel.

(57) An assembly (3) for locking a vehicle wheel (1) to a hub (2) to which the wheel is fastened by fasteners (4) has a projection (7) provided on a fastener (4) extending outwardly from the wheel and a plate member (9) having a recess (14), together with a locking nut (12) adapted to be attached to the projection (7) and to be wholly received in the recess (14), and a key member (18) having pins (16) co-operating with apertures (15) on the nut (12) to enable it to be inserted into and removed from the recess (14). The assembly (3) is locked simply by virtue of the nut being received in the recess (14). The plate member (9) may comprise a wheel trim extending over substantially the whole external surface of the wheel (1). The assembly (3) also serves to lock the wheel trim to the wheel (1).

FIG.1.

## VEHICLE WHEELS

This invention relates to vehicle wheels, and in particular to means for locking a wheel onto its hub to prevent theft of the wheel, and to means for locking a wheel trim to a wheel.

It is of course well-known to provide locking wheel nuts on vehicle wheels, in order to lock the wheels onto the hubs. One known type of locking nut has a sleeve which fits over the wheel nut and can be locked to it. In the locked condition, the sleeve rotates freely on the nut, preventing removal of both sleeve and nut, and in the unlocked condition the sleeve can be removed to allow access to the nut. These locking nuts generally deter thieves, but they tend to be expensive, because the lock mechanism is relatively complex, and they can be awkward to lock and unlock.

According to one aspect of the present invention, an assembly for locking a vehicle wheel to a hub, to which the wheel is fastened by a plurality of fastening means, includes attachment means having a projection provided on a fastening means and extending outwardly from the wheel, and a recess, together with a locking nut adapted to be attached to the projection and to be wholly received in the recess, and a key member co-operating with the means on the nut to enable it to be inserted into and removed from the recess.

As the assembly is locked simply by virtue of the nut being received in the recess, the construction is simple and the nut is easily inserted and removed.

The recess is conveniently provided on a separate plate member, which has an aperture through which the projection extends.

The projection and nut preferably have a screw-threaded engagement. Conveniently, only one fastening means is provided with a projection. The plate member may then be adapted to conceal the remaining fastening means, which may comprise wheel nuts fastening onto studs on the hub, or bolts received in apertures in the hub.

The nut may have one or more apertures adapted to receive complementary pins on the key member.

The plate member may comprise a wheel trim extending over substantially the whole external surface of the wheel. It will be noted that in this event the assembly also serves to lock the wheel trim to the wheel, and a second aspect of the invention is concerned with this. Normally, a wheel trim is clipped onto the wheel, the clips being integral with the trim, or separate members. The clips tend either to be too loose so that the wheel trim falls off, or to be too tight, so that they are very difficult to remove and replace.

According to a second aspect of the present invention, means for locking a trim to a vehicle wheel comprises a projection extending outwardly from the wheel through an aperture provided in the trim, and a locking nut adapted to be attached to the projection and to be wholly received in a recess in the trim, the nut having means co-operating with a key member to enable the nut to be inserted into and removed from the recess.

This provides a convenient way of locking the trim to the wheel, while enabling it to be readily removed and replaced.

As a whole therefore, the invention is particularly useful as a simple and inexpensive way of applying a decorative trim to a vehicle wheel to enhance its appearance, which both locks the wheel to the hub and the trim to the wheel.

Some embodiments of both aspects of the invention are illustrated in the accompanying drawings, in which

Figure 1 is an exploded side view of part of a vehicle wheel assembly, including locking means;

Figure 2 is a similar to Figure 1, but shows a modification;

Figure 3 is a view, partly from the rear, of a wheel trim; and

Figure 4 is a section along the line 4-4 of Figure 3.

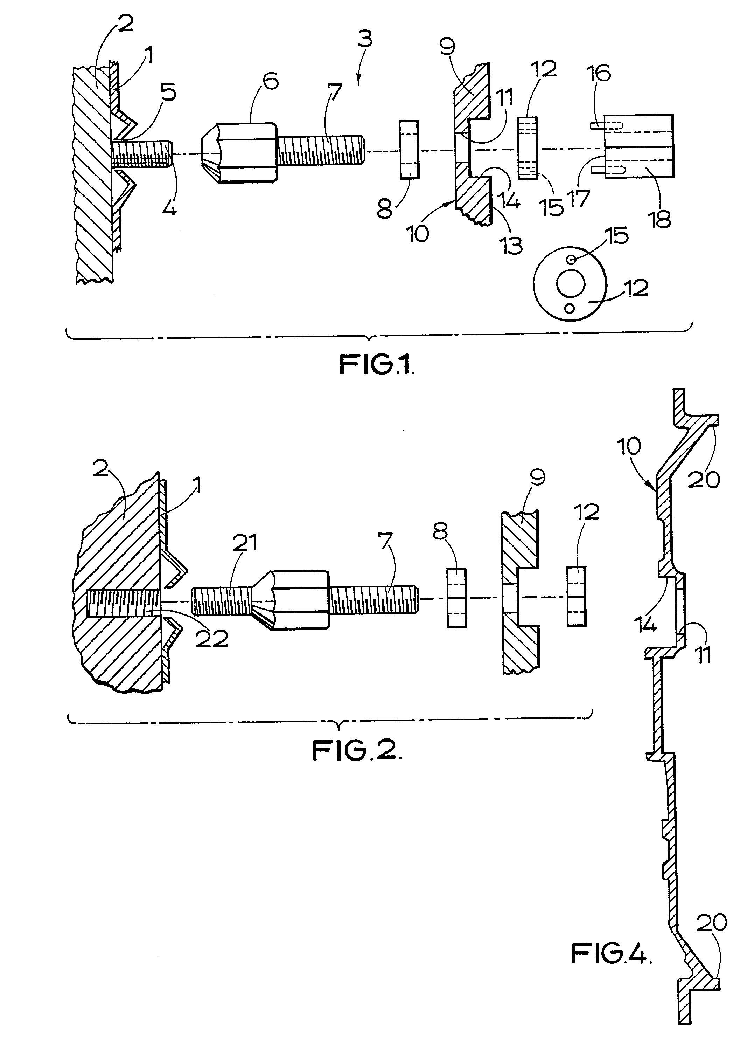

The vehicle wheel assembly shown in Figure 1 comprises a vehicle wheel 1 adapted to be fastened to a hub 2, and locked to it by a locking assembly 3. The hub 2 is provided with a plurality - usually four or five - screw-threaded studs 4, only one of which is shown. The wheel 2 has apertures 5 which fit over the studs 4, and a wheel nut 6 provided on each stud 4 fastens the wheel 1 to the hub 2. The nut 6 shown forms part of the locking assembly 3, and is of special construction, but the remainder, not shown, are of a standard construction.

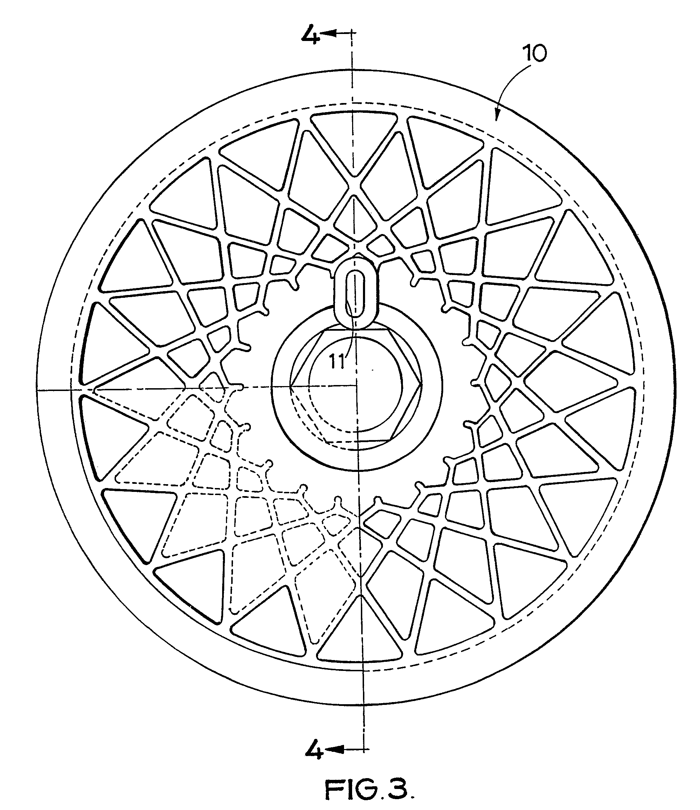

The nut 6 has a screw-threaded projection 7 extending outwardly from the wheel 1, the rest of the locking assembly 3 being attached to the projection 7. The assembly 3 comprises a spacer nut 8 screwed onto the projection 7, a plate member 9, in this case the aluminium wheel trim 10 shown in Figures 3 and 4, which has an elongate aperture 11 fitting over the projection 7, and a locking nut 12 which is screwed onto the projection. On the outer face 13 of the trim 10 the aperture 11 is surrounded by a recess 14, which is adapted to receive the whole of the locking nut 12. The nut 12 has a pair of holes 15. These are adapted to co-operate with a pair of hardened pins 16 provided on the end face 17 of a tubular key member 18.

In use, the components are assembled on the hub 2 in the order shown, and the key member 18 is engaged in the nut 12, and used to screw the nut 12 all the way into the recess 14. Once the key member 18 is removed the nut 12 is locked by virtue of being received in the recess. The key member 18 is then used to unlock the nut 12 to enable the assembly 3 to be removed.

In use, the spacer nut 8 ensures that the trim 10 is spaced outwardly from the other wheel nuts, which are concealed by it, so that the appearance of the wheel is neat. The locking assembly 3 provides a simple and relatively cheap way of locking the vehicle wheel 1 to its hub 2.

It will also be noted that the assembly 3 serves as a means for locking the trim 10 to the wheel 1. As shown in detail in Figures 3 and 4, the outer peripheral edge of the trim 10 has an inturned flange 20 which engages with the wheel rim, to locate the trim. It is not necessary to provide any clips to fix the trim 10 to the wheel 1, as it is locked on by the assembly 3.

Thus, the invention is particularly useful as a way of applying a decorative trim to a plain wheel to enhance its appearance, and providing for the wheel to be locked to the hub, and for the trim to be locked to the wheel.

In the modification of Figure 2, the wheel 1 is fastened to the hub 2 by bolts 21 received in apertures 22 in the hub, rather than by the studs 4 and nuts 6. One of the bolts 21 is provided with the projection 7 for the locking assembly 3, which is the same as that shown in Figure 1, and corresponding reference numerals have been applied to corresponding parts.

## Claims

1. An assembly (3) for locking a vehicle wheel (1) to a hub (2) to which the wheel (1) is fastened by a plurality of fastening means (4,6;21,22), characterised in that the assembly comprises attachment means having a projection (7) provided on a fastening means and extending outwardly from the wheel (1), and a recess (14); together with a locking nut (12) adapted to be attached to the projection (7) and to be wholly received in the recess (14), and a key member (18) co-operating with means on the nut (12) to enable it to be inserted into and removed from the recess (14).

2. An assembly as claimed in claim 1, in which the attachment means includes a plate member (9) in which the recess (14) is provided, and which has an aperture (11) through which the projection (7) extends.

3. An assembly as claimed in claim 1 or claim 2, in which the projection (7) and the nut (12) have a screw-threaded engagement.

4. An assembly as claimed in any preceding claim, in which only one fastening means (4,6;21,22) is provided with a projection.

5. An assembly as claimed in any preceding claim, in which each fastening means comprises a wheel nut (6), fastening onto a stud (4) on the hub (2).

6. An assembly as claimed in any of claims 1 to 4, in which each fastening means comprises a bolt (21) received in an aperture (22) in the hub (2).

7. An assembly as claimed in any of claims 2 to 6, in which the plate member (9) is adapted to conceal the fastening means not provided with projections.

8. An assembly as claimed in any of claims 2 to 7, in which the plate member (9) comprises a wheel trim (10) extending over substantially the whole external surface of the wheel.

9. An assembly as claimed in any preceding claim, in which the nut (12) has one or more apertures (15) adapted to receive complementary pins (16) on the key member (18).

10. A locking means for locking a trim (10) to a vehicle wheel, characterised in that it comprises a projection (7) extending outwardly from the wheel (1) through an aperture (11) provided in the trim (10), and a locking nut (12) adapted to be attached to the projection (7) and to be wholly received in a recess (14) in the trim (10), the nut (12) having means co-operating with a key member (18) to enable the nut (12) to be inserted into and removed from the recess (14).

FIG.1.

FIG.2.

FIG.4.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 161 869 (DIXON)<br>* Column 1, line 60 - column 2, line 57; figures 1-3 *<br>--- | 1-10 | B 60 R 25/00<br>F 16 B 41/00 //<br>F 16 B 23/00 |
| A | US-A-2 797 572 (PRALL)<br>* Column 2, line 53 - column 3, line 14 * | 1,9 | |
| X | <br>--- | 10 | |
| A | US-A-2 747 940 (TRACY)<br>----- | | |

TECHNICAL FIELDS SEARCHED (Int. Cl.4)

B 60 R
F 16 B

The present search report has been drawn up for all claims

| Place of search | Date of completion of the search | Examiner |
|---|---|---|
| THE HAGUE | 02-06-1989 | VAN DER WAL W |

EPO FORM 1503 03.82 (P0401)